(19) Europäisches Patentamt
European Patent Office
Office européen des brevets

(11) **EP 1 882 703 B2**

(12) **NEW EUROPEAN PATENT SPECIFICATION**

After opposition procedure

(45) Date of publication and mention
of the opposition decision:
**23.11.2011 Bulletin 2011/47**

(45) Mention of the grant of the patent:
**27.08.2008 Bulletin 2008/35**

(51) Int Cl.:
*C08F 10/06* (2006.01)   *C08F 110/06* (2006.01)
*C08F 297/08* (2006.01)

(21) Application number: **06014271.8**

(22) Date of filing: **10.07.2006**

(54) **Short-chain branched polypropylene**

Kurzkettig verzweigtes Polypropylen

Polypropylène ramifié de chaine courte

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**30.01.2008 Bulletin 2008/05**

(73) Proprietor: **Borealis Technology Oy
06101 Porvoo (FI)**

(72) Inventors:
• **Stadlbauer, Manfred
4040 Linz (AT)**
• **Ernst, Eberhard
4210 Unterweitersdorf (AT)**

• **Huhtanen, Lauri
07940 Loviisa (FI)**
• **Daniels, Yvo
3520 Zonhofen (BE)**
• **Jacobs, Franck
9940 Evergem (BE)**

(74) Representative: **Lux, Berthold et al
Maiwald Patentanwalts GmbH
Postfach 330523
80065 München (DE)**

(56) References cited:
EP-A1- 1 847 555    WO-A-00/68315
WO-A-01/25296    WO-A-99/24478
WO-A-02/090400    US-A1- 2002 173 602
US-B1- 6 225 432

**Description**

The present invention relates to a new class of polypropylenes.

Polypropylene has become more and more attractive for many different commercial applications. One reason might be that new developed processes based on single-site-catalyst systems open the possibility to tailor new polypropylenes for demanding end-applications which has been not possible for a long time. Quite often such new polypropylenes based on single-site-catalyst systems are employed in case materials with a high stiffness are required. Moreover the amount of xylene solubles compared to conventional Ziegler-Natta products can be significantly lowered which opens the possibility to apply polypropylene in sensitive areas as in the field of medicine or food packaging. However another factor which must be considered when developing new materials is whether they can be produced with reasonable effort. High output rates along with a minimum of energy supply are appreciated (inter alia the polypropylene shall be formable at low temperatures). However normally better process properties are paid with inferior material properties. Thus there must be always found a balance between processability and end-product properties. Up to know there is still the desire to develop polypropylenes which can be used in high demanding applications requiring good mechanical properties as high temperature resistance and stiffness, as well as high levels of purity. On the other hand said polypropylenes shall be easily processable.

Hence the object of the present invention is to provide a polypropylene having good process properties, as low processing temperature and high process stability, in combination with good mechanical properties as high stiffness and high purity, i.e. rather low amounts of extractable fractions.

The finding of the present invention is to provide a polypropylene with improved balance between mechanical and process properties by introducing a specific degree of short-chain branching and a specific amount of non-crystalline areas.

Hence, the present invention is related to a polypropylene having

a) xylene solubles (XS) of at least 0.5 wt.-% and

b) a strain hardening index $(SHI@1s^{-1})$ of 0.15 to 0.30 measured by a deformation rate $d\varepsilon/dt$ of 1.00 s$^{-1}$ at a temperature of 180 ˚C, wherein the strain hardening index $(SHI)$ is defined as the slope of the logarithm to the basis 10 of the tensile stress growth function (lg $(\eta_E^+)$) as function of the logarithm to the basis 10 of the Hencky strain (lg $(\varepsilon)$) in the range of the Hencky strains between 1 and 3.

Surprisingly, it has been found that polypropylenes with such characteristics have superior properties compared to the polypropylenes known in the art. Especially, the inventive polypropylenes show a high process stability at low process temperatures. Moreover and surprisingly the inventive polypropylene has in addition good mechanical properties as a high stiffness expressed in tensile modulus.

A first requirement of the present invention is that the polypropylene has xylene solubles of same extent, i.e. of at least 0.50 wt.-%. Xylene solubles are the part of the polymer soluble in cold xylene determined by dissolution in boiling xylene and letting the insoluble part crystallize from the cooling solution (for the method see below in the experimental part). The xylene solubles fraction contains polymer chains of low stereo-regularity and is an indication for the amount of non-crystalline areas. Hence it is preferred that the xylene solubles are more than 0.60 wt.-%. On the other hand too high levels of xylene solubles are detrimental for some applications like food packing as they represent potential contamination risk. Accordingly it is preferred that the xylene solubles are not more than 1.50 wt.-%, still more preferably not more than 1.35 wt.-% and yet more preferably not more than 1.00 wt.-%. In preferred embodiments the xylene solubles are in the range of 0.50 to 1.50 wt.-%, yet more preferably in the range of 0.60 to 1.35 wt.-%, and still more preferably in the range of 0.60 to 1.00 wt.-%.

The new polypropylenes are characterized in particular by extensional melt flow properties. The extensional flow, or deformation that involves the stretching of a viscous material, is the dominant type of deformation in converging and squeezing flows that occur in typical polymer processing operations. Extensional melt flow measurements are particularly useful in polymer characterization because they are very sensitive to the molecular structure of the polymeric system being tested. When the true strain rate of extension, also referred to as the Hencky strain rate, is constant, simple extension is said to be a "strong flow" in the sense that it can generate a much higher degree of molecular orientation and stretching than flows in simple shear. As a consequence, extensional flows are very sensitive to crystallinity and macro-structural effects, such as short-chain branching, and as such can be far more descriptive with regard to polymer characterization than other types of bulk rheological measurement which apply shear flow.

Accordingly one requirement of is that the polypropylene has strain hardening index $(SHI@1s^{-1})$ in the range of 0.15 to 0.30. In a further embodiment it is preferred that the strain hardening index $(SHI@1s^{-1})$ is in the range of 0.20 to 0.30.

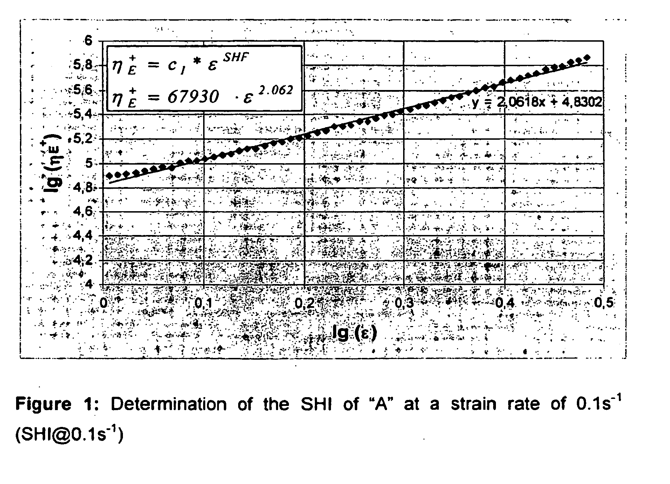

The strain hardening index is a measure for the strain hardening behavior of the polypropylene melt. Moreover values of the strain hardening index ($SHI@1s^{-1}$) of more than 0.10 indicate a non-linear polymer, i.e. a short-chain branched polymer. In the present invention, the strain hardening index ($SHI@1s^{-1}$) is measured by a deformation rate $d\varepsilon/dt$ of 1.00 s$^{-1}$ at a temperature of 180 °C for determining the strain hardening behavior, wherein the strain hardening index ($SHI@1s^{-1}$) is defined as the slope of the tensile stress growth function $\eta_E^+$ as a function of the Hencky strain $\varepsilon$ on a logarithmic scale between 1.00 and 3.00 (see figure 1). Thereby the Hencky strain $\varepsilon$ is defined by the formula $\varepsilon = \dot{\varepsilon}_H \cdot t$, wherein
the Hencky strain rate $\dot{\varepsilon}_H$ is defined by the formula

$$\dot{\varepsilon}_H \ = \ \frac{2 \cdot \Omega \cdot R}{L_0}$$

with
"$L_0$" is the fixed, unsupported length of the specimen sample being stretched which is equal to the centerline distance between the master and slave drums
"R" is the radius of the equi-dimensional windup drums, and
"$\Omega$" is a constant drive shaft rotation rate.

In turn the tensile stress growth function $\eta_E^+$ is defined by the formula

$$\eta_E^+(\varepsilon) = \frac{F(\varepsilon)}{\dot{\varepsilon}_H \cdot A(\varepsilon)}$$

with

$$T(\varepsilon) = 2 \cdot R \cdot F(\varepsilon)$$

and

$$A(\varepsilon) = A_0 \cdot \left(\frac{d_S}{d_M}\right)^{2/3} \cdot \exp(-\varepsilon)$$

wherein
the Hencky strain rate $\dot{\varepsilon}_H$ is defined as for the Hencky strain $\varepsilon$
"F" is the tangential stretching force
"R" is the radius of the equi-dimensional windup drums
"T" is the measured torque signal, related to the tangential stretching force "F"
"A" is the instantaneous cross-sectional area of a stretched molten specimen
$A_0$" is the cross-sectional area of the specimen in the solid state (i.e. prior to melting),
"$d_S$" is the solid state density and
"$d_M$" the melt density of the polymer.

In addition, it is preferred that the polypropylene shows strain rate thickening which means that the strain hardening increases with extension rates. Similarly to the measurement of $SHI@1s^{-1}$, a strain hardening index ($SHI$) can be determined at different strain rates. A strain hardening index ($SHI$) is defined as the slope of the logarithm to the basis 10 of the tensile stress growth function $\eta_E^+$, $\lg(\eta_E^+)$, as function of the logarithm to the basis 10 of the Hencky strain $\varepsilon$, $\lg(\varepsilon)$, between Hencky strains 1.00 and 3.00 at a temperature of 180 °C, wherein a $SHI@0.1\ s^{-1}$ is determined with a deformation rate $\dot{\varepsilon}_H$ of 0.10 s$^{-1}$, a $SHI@0.3\ s^{-1}$ is determined with a deformation rate $\dot{\varepsilon}_H$ of 0.30 s$^{-1}$, a $SHI@3.0\ s^{-1}$ is determined with a deformation rate $\dot{\varepsilon}_H$ of 3.00 s$^{-1}$, a $SHI@10.0\ s^{-1}$ is determined with a deformation rate $\dot{\varepsilon}_H$ of 10.0 s$^{-1}$. In comparing the strain hardening index ($SHI$) at those five strain rates $\dot{\varepsilon}_H$ of 0.10, 0.30, 1.00, 3.00 and 10.00 s$^{-1}$,

the slope of the strain hardening index (*SHI*) as function of the logarithm on the basis 10 of $\dot{\varepsilon}_H$, $lg(\dot{\varepsilon}_H)$, is a characteristic measure for short-chain-branching. Therefore, a multi-branching index (*MBI*) is defined as the slope of the strain hardening index (*SHI*) as a function of $lg(\dot{\varepsilon}_H)$, i.e. the slope of a linear fitting curve of the strain hardening index (*SHI*) versus $lg(\dot{\varepsilon}_H)$ applying the least square method, preferably the strain hardening index (*SHI*) is defined at deformation rates $\dot{\varepsilon}_H$ between 0.05 s$^{-1}$ and 20.00 s$^{-1}$, more preferably between 0.10 s$^{-1}$ and 10.00 s$^{-1}$, still more preferably at the deformations rates 0.10, 0.30, 1.00, 3.00 and 10.00 s$^{-1}$. Yet more preferably the *SHI*-values determined by the deformations rates 0.10, 0.30, 1.00, 3.00 and 10.00 s$^{-1}$ are used for the linear fit according to the least square method when establishing the multi-branching index (*MBI*).

Hence, a further requirement is that the polypropylene has a multi-branching index (*MBI*) of at least 0.10, more preferably of at least 0.15, yet more preferably the multi-branching index (*MBI*) is in the range of 0.10 to 0.30. In a preferred embodiment the polypropylene has a multi-branching index (*MBI*) in the range of 0.15 to 0.30.

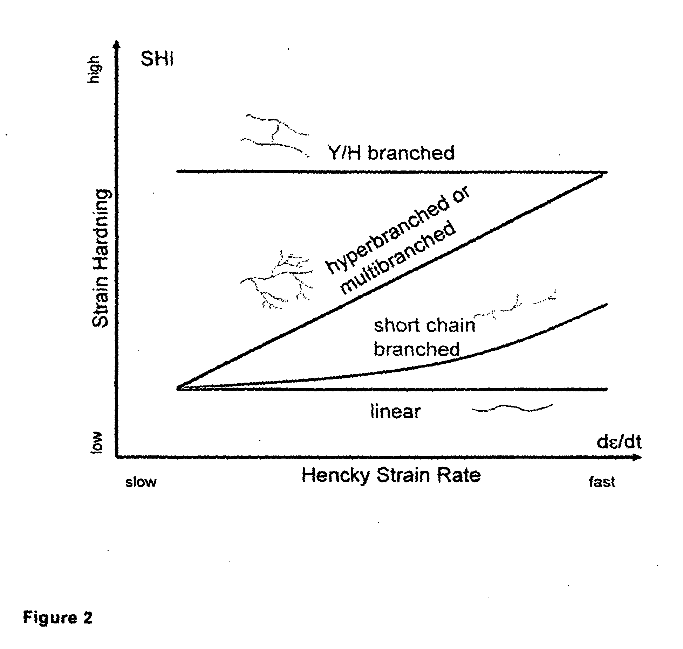

Accordingly, the polypropylenes of the present invention, i.e. short-chain branched polypropylenes, are characterized by the fact that their strain hardening index (*SHI*) increases to some extent with the deformation rate $\dot{\varepsilon}_H$, i.e. a phenomenon which is not observed in linear polypropylenes. Single branched polymer types (so called Y polymers having a backbone with a single long side-chain and an architecture which resembles a "Y") or H-branched polymer types (two polymer chains coupled with a bridging group and a architecture which resemble an "H") as well as linear do not show such a relationship, i.e. the strain hardening index (*SHI*) is not influenced by the deformation rate (see Figures 2). Accordingly, the strain hardening index (*SHI*) of known polymers, in particular known polypropylenes, does not increase with increase of the deformation rate ($d\varepsilon/dt$). Industrial conversion processes which imply elongational flow operate at very fast extension rates. Hence the advantage of a material which shows more pronounced strain hardening (measured by the strain hardening index *SHI*) at high strain rates becomes obvious. The faster the material is stretched, the higher the strain hardening index and hence the more stable the material will be in conversion.

Additionally the inventive polypropylene has preferably a branching index g' of less than 1.00. Still more preferably the branching index g' is more than 0.7. Thus it is preferred that the branching index g' of the polypropylene is in the range of more than 0.7 to below 1.0. The branching index g' defines the degree of branching and correlates with the amount of branches of a polymer. The branching index g' is defined as g'=[IV]$_{br}$/[IV]$_{lin}$ in which g' is the branching index, [IV$_{br}$] is the intrinsic viscosity of the branched polypropylene and [IV]$_{lin}$ is the intrinsic viscosity of the linear polypropylene having the same weight average molecular weight (within a range of $\pm$3%) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference.

The intrinsic viscosity needed for determining the branching index g' is measured according to DIN ISO 1628/1, October 1999 (in Decalin at 135 ˚C).

For further information concerning the measuring methods applied to obtain the relevant data for the branching index g', the tensile stress growth function $\eta_E^+$, the Hencky strain rate $\dot{\varepsilon}_H$, the Hencky strain $\varepsilon$ and the multi-branching index (MBI) it is referred to the example section.

The molecular weight distribution (MWD) (also determined herein as ploydispersity) is the relation between the numbers of molecules in a polymer and the individual chain length. The molecular weight distribution (MWD) is expressed as the ratio of weight average molecular weight (M$_w$) and number average molecular weight (M$_n$). The number average molecular weight (M$_n$) is an average molecular weight of a polymer expressed as the first moment of a plot of the number of molecules in each molecular weight range against the molecular weight. In effect, this is the total molecular weight of all molecules divided by the number of molecules. In turn, the weight average molecular weight (M$_w$) is the first moment of a plot of the weight of polymer in each molecular weight range against molecular weight.

The number average molecular weight (M$_n$) and the weight average molecular weight (M$_w$) as well as the molecular weight distribution (MWD) are determined by size exclusion chromatography (SEC) using Waters Alliance GPCV 2000 instrument with online viscometer. The oven temperature is 140 ˚C. Trichlorobenzene is used as a solvent (ISO 16014).

It is preferred that the polypropylene has a weight average molecular weight (M$_w$) from 10,000 to 2,000,000 g/mol, more preferably from 20,000 to 1,500,000 g/mol.

The number average molecular weight (M$_n$) of the polypropylene is preferred in the range of 5,000 to 1,000,000 g/mol, more preferably from 10,000 to 750,000 g/mol.

As a broad molecular weight distribution improves the processability of the polypropylene the molecular weight distribution (MWD) is preferably up to 20.00, more preferably up to 10.00, still more preferably up to 8.00. In an alternative embodiment the molecular weight distribution (MWD) is preferably between 1.00 to 8.00, still more preferably in the range of 1.00 to 6.00, yet more preferably in the range of 1.00 to 4.00.

Furthermore, it is preferred that the polypropylene has a melt flow rate (MFR) given in a specific range. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined dye under specified temperature and pressure conditions and the measure of viscosity of the polymer which, in turn, for each type of polymer is mainly influenced by its molecular weight but also by its degree of branching. The melt flow rate measured under a load of 2.16 kg at 230 ˚C (ISO 1133) is denoted as $MFR_2$. Accordingly, it is preferred that in the present invention the polypropylene has an $MFR_2$ up to 10.00 g/10min, more preferably up to 6.00 g/10min. In another preferred embodiment the polypropylene has $MFR_2$ up to 4 g/10min. A preferred range for the $MFR_2$ is 1.00 to 10.00 g/10 min, more preferably in the range of 1.00 to 6.00 g/10min.

As cross-linking has a detrimental effect on the extensional flow properties it is preferred that the polypropylene according to this invention is non-cross-linked.

More preferably, the polypropylene according to this invention shall have a rather high isotacticity measured by meso pentad concentration (also referred herein as pentad concentration), i.e. higher than 91 %, more preferably higher than 93 %, still more preferably higher than 94 % and most preferably higher than 95 %. On the other hand pentad concentration shall be not higher than 99.5 %. The pentad concentration is an indicator for the narrowness in the regularity distribution of the polypropylene and measured by NMR-spectroscopy.

In addition, it is preferred that the polypropylene has a melting temperature Tm of higher than 148 ˚C, more preferred higher than 150 ˚C. The measuring method for the melting temperature Tm is discussed in the example section.

Preferably the polymer according to this invention can be produced with low levels of impurities, i.e. low levels of aluminium (AI) residue and/or low levels of silicon residue (Si) and/or low levels of boron (B) residue. Accordingly the aluminium residues of the polypropylene can be lowered to a level of 12.00 ppm. On the other hand the properties of this invention are not detrimentally influenced by the presence of residues. Hence in one embodiment the polypropylene according to this invention is preferably essentially free of any boron and/or silicon residues, i.e. are not detectible (the analysis of residue contents is defined in the example section). In another embodiment the polypropylene according to this invention comprises preferably boron residues and/or silicon residues in detectable amounts, i.e. in amounts of more than 0.10 ppm of boron residues and/or silicon residues, still more preferably in amounts of more than 0.20 ppm of boron residues and/or silicon residues, yet more preferably in amounts of more than 0.50 ppm of boron residues and/or silicon residues. In still another embodiment the polypropylene according to this invention comprises aluminium in detectable amounts, i.e. in amounts of more than 5.00 ppm of aluminium residues, still more preferably more than 12.00 ppm of aluminium residues and yet more preferably more than 13.00 ppm of aluminium residues. In yet another embodiment the polypropylene according to this invention comprises boron and/or silicon in detectable amounts, i.e. in amounts of more than 0.20 ppm of boron residues and/or silicon residues, and aluminium residues in amounts of more than 12.00 ppm, more preferably of more than 25 ppm.

In one embodiment the inventive polypropylene (short-chain branched polypropylene) as defined above (and further defined below) is preferably unimodal. In another preferred embodiment the inventive polypropylene (short-chain branched polypropylene) as defined above (and further defined below) is preferably multimodal, more preferably bimodal.

"Multimodal" or "multimodal distribution" describes a frequency distribution that has several relative maxima (contrary to unimodal having only one maximum). In particular, the expression "modality of a polymer" refers to the form of its molecular weight distribution (MWD) curve, i.e. the appearance of the graph of the polymer weight fraction as a function of its molecular weight. If the polymer is produced in the sequential step process, i.e. by utilizing reactors coupled in series, and using different conditions in each reactor, the different polymer fractions produced in the different reactors each have their own molecular weight distribution which may considerably differ from one another. The molecular weight distribution curve of the resulting final polymer can be seen at a super-imposing of the molecular weight distribution curves of the polymer fraction which will, accordingly, show a more distinct maxima, or at least be distinctively broadened compared with the curves for individual fractions.

A polymer showing such molecular weight distribution curve is called bimodal or multimodal, respectively.

In case the polypropylene is not unimodal it is preferably bimodal.

The polypropylene according to this invention can be a homopolymer or a copolymer. In case the polypropylene is unimodal the polypropylene is preferably a polypropylene homopolymer as defined below. In turn in case the polypropylene is multimodal, more preferably bimodal, the polypropylene can be a polypropylene homopolymer as well as a polypropylene copolymer. However it is in particular preferred that in case the polypropylene is multimodal, more preferably bimodal, the polypropylene is a polypropylene homopolymer. Further more it is preferred that at least one of the fractions of the multimodal polypropylene is a short-chain branched polypropylene, preferably a short-chain branched polypropylene homopolymer, according to this invention.

The polypropylene according to this invention is most preferably a unimodal polypropylene homopolymer.

The expression polypropylene homopolymer as used in this invention relates to a polypropylene that consists substantially, i.e. of at least 97 wt%, preferably of at least 99 wt%, and most preferably of at least 99.8 wt% of propylene units. In a preferred embodiment only propylene units in the polypropylene homopolymer are detectible. The comonomer content can be determined with FT infrared spectroscopy, as described below in the examples.

In case the polypropylene according to this invention is a multimodal or bimodal polypropylene copolymer, it is preferred that the comonomer is ethylene. However, also other comonomers known in the art are suitable. Preferably, the total amount of comonomer, more preferably ethylene, in the propylene copolymer is up to 30 wt%, more preferably up to 25 wt%.

In a preferred embodiment, the multimodal or bimodal polypropylene copolymer is a polypropylene copolymer comprising a polypropylene homopolymer matrix being a short chain branched polypropylene according to this invention and an ethylene-propylene rubber (EPR).

The polypropylene homopolymer matrix can be unimodal or multimodal, i.e. bimodal. However it is preferred that polypropylene homopolymer matrix is unimodal.

Preferably, the ethylene-propylene rubber (EPR) in the total multimodal or bimodal polypropylene copolymer is up to 80 wt%. More preferably the amount of ethylene-propylene rubber (EPR) in the total multimodal or bimodal polypropylene copolymer is in the range of 20 to 80 wt%, still more preferably in the range of 30 to 60 wt%.

In addition, it is preferred that the multimodal or bimodal polypropylene copolymer being a copolymer comprises a polypropylene homopolymer matrix being a short chain branched polypropylene according to this invention and an ethylene-propylene rubber (EPR) with an ethylene-content of up to 50 wt%.

In addition, it is preferred that the polypropylene as defined above is produced in the presence of the catalyst as defined below. Furthermore, for the production of the polypropylene as defined above, the process as stated below is preferably used.

The polypropylene according to this invention has been in particular obtained by a new catalyst system. This new catalyst system comprises a symmetric catalyst, whereby the catalyst system has a porosity of less than 1.40 ml/g, more preferably less than 1.30 ml/g and most preferably less than 1.00 ml/g. The porosity has been measured according to DIN 66135 ($N_2$). In another preferred embodiment the porosity is not detectable when determined with the method applied according to DIN 66135 ($N_2$).

A symmetric catalyst according to this invention is a metallocene compound having a $C_2$-symetry. Preferably the $C_2$-symetric metallocene comprises two identical organic ligands, still more preferably comprises only two organic ligands which are identical, yet more preferably comprises only two organic ligands which are identical and linked via a bridge.

Said symmetric catalyst is preferably a single site catalyst (SSC).

Due to the use of the catalyst system with a very low porosity comprising a symmetric catalyst the manufacture of the above defined short-chain branched polypropylene is possible.

Furthermore it is preferred, that the catalyst system has a surface area of of lower than 25 $m^2/g$, yet more preferred lower than 20 $m^2/g$, still more preferred lower than 15 $m^2/g$, yet still lower than 10 $m^2/g$ and most preferred lower than 5 $m^2/g$. The surface area according to this invention is measured according to ISO 9277 ($N_2$).

It is in particular preferred that the catalytic system according to this invention comprises a symmetric catalyst, i.e. a catalyst as defined above and in further detail below, and has porosity not detectable when applying the method according to DIN 66135 ($N_2$) and has a surface area measured according to ISO 9277 ($N_2$) less than 5 $m^2/g$.

Preferably the symmetric catalyst compound, i.e. the $C_2$-symetric metallocene, has the formula (I):

$$(CP)_2R_1MX_2 \qquad (I)$$

wherein

M is Zr, Hf or Ti, more preferably Zr, and

X is independently a monovalent anionic ligand, such as σ-ligand

R is a bridging group linking the two Cp ligands

Cp is an organic ligand selected from the group consisting of unsubstituted cyclopenadienyl, unsubstituted indenyl, unsubstituted tetrahydroindenyl, unsubstituted fluorenyl, substituted cyclopenadienyl, substituted indenyl, substituted tetrahydroindenyl, and substituted fluorenyl,

with the proviso that both Cp-ligands are selected from the above stated group and both Cp-ligands are chemically the same, i.e. are identical.

The term "δ-ligand" is understood in the whole description in a known manner, i.e. a group bonded to the metal at one or more places via a sigma bond. A preferred monovalent anionic ligand is halogen, in particular chlorine (Cl).

Preferably, the symmetric catalyst is of formula (I) indicated above,

wherein

M is Zr and

each X is Cl.

Preferably both identical Cp-ligands are substituted.

The optional one or more substituent(s) bonded to cyclopenadienyl, indenyl, tetrahydroindenyl, or fluorenyl may be selected from a group including halogen, hydrocarbyl (e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the

ring moiety, $C_6$-$C_{20}$-heteroaryl, $C_1$-$C_{20}$-haloalkyl, -SiR"$_3$, -OSiR"$_3$, -SR", -PR"$_2$ and -NR"$_2$, wherein each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl.

More preferably both identical Cp-ligands are indenyl moieties wherein each indenyl moiety bear one or two substituents as defined above. More preferably each of the identical Cp-ligands is an indenyl moiety bearing two substituents as defined above, with the proviso that the substituents are chosen in such are manner that both Cp-ligands are of the same chemical structure, i.e both Cp-ligands have the same substituents bonded to chemically the same indenyl moiety.

Still more preferably both identical Cp's are indenyl moieties wherein the indenyl moieties comprise at least at the five membered ring of the indenyl moiety, more preferably at 2-position, a substituent selected from the group consisting of alkyl, such as $C_1$-$C_6$ alkyl, e.g. methyl, ethyl, isopropyl, and trialkyloxysiloxy, wherein each alkyl is independently selected from $C_1$-$C_6$ alkyl, such as methyl or ethyl, with proviso that the indenyl moieties of both Cp are of the same chemical structure, i.e both Cp-ligands have the same substituents bonded to chemically the same indenyl moiety.

Still more preferred both identical Cp are indenyl moieties wherein the indenyl moieties comprise at least at the six membered ring of the indenyl moiety, more preferably at 4-position, a substituent selected from the group consisting of a $C_6$-$C_{20}$ aromatic ring moiety, such as phenyl or naphthyl, preferably phenyl, which is optionally substituted with one or more substitutents, such as $C_1$-$C_6$ alkyl, and a heteroaromatic ring moiety, with proviso that the indenyl moieties of both Cp are of the same chemical structure, i.e both Cp-ligands have the same substituents bonded to chemically the same indenyl moiety.

Yet more preferably both identical Cp are indenyl moieties wherein the indenyl moieties comprise at the five membered ring of the indenyl moiety, more preferably at 2-position, a substituent and at the six membered ring of the indenyl moiety, more preferably at 4-position, a further substituent, wherein the substituent of the five membered ring is selected from the group consisting of alkyl, such as $C_1$-$C_6$ alkyl, e.g. methyl, ethyl, isopropyl, and trialkyloxysiloxy and the further substituent of the six membered ring is selected from the group consisting of a $C_6$-$C_{20}$ aromatic ring moiety, such as phenyl or naphthyl, preferably phenyl, which is optionally substituted with one or more substituents, such as $C_1$-$C_6$ alkyl, and a heteroaromatic ring moiety, with proviso that the indenyl moieties of both Cp's are of the same chemical structure, i.e both Cp-ligands have the same substituents bonded to chemically the same indenyl moiety.

Concerning the moiety "R" it is preferred that "R" has the formula (II)

$$-Y(R')_2- \qquad (II)$$

wherein
Y is C, Si or Ge, and
R' is $C_1$ to $C_{20}$ alkyl, $C_6$-$C_{12}$ aryl, or $C_7$-$C_{12}$ arylalkyl or trimethylsilyl.

In case both Cp-ligands of the symmetric catalyst as defined above, in particular case of two indenyl moieties, are linked with a bridge member R, the bridge member R is typically placed at 1-position. The bridge member R may contain one or more bridge atoms selected from e.g. C, Si and/or Ge, preferably from C and/or Si. One preferable bridge R is -Si(R')$_2$-, wherein R' is selected independently from one or more of e.g. trimethylsilyl, $C_1$-$C_{10}$ alkyl, $C_1$-$C_{20}$ alkyl, such as $C_6$-$C_{12}$ aryl, or $C_7$-$C_{40}$, such as $C_7$-$C_{12}$ arylalkyl, wherein alkyl as such or as part of arylalkyl is preferably $C_1$-$C_6$ alkyl, such as ethyl or methyl, preferably methyl, and aryl is preferably phenyl. The bridge -Si(R')$_2$- is preferably e.g. -Si($C_1$-$C_6$ alkyl)$_2$-, -Si(phenyl)$_2$- or -Si($C_1$-$C_6$ alkyl)(phenyl)-, such as -Si(Me)$_2$-.

In a preferred embodiment the symmetric catalyst, i.e. the $C_2$-symetric metallocene, is defined by the formula (III)

$$(Cp)_2R_1ZrCl_2 \qquad (III)$$

wherein
both Cp coordinate to M and are selected from the group consisting of unsubstituted cyclopenadienyl, unsubstituted indenyl, unsubstituted tetrahydroindenyl, unsubstituted fluorenyl, substituted cyclopenadienyl, substituted indenyl, substituted tetrahydroindenyl, and substituted fluorenyl,
with the proviso that both Cp-ligands are chemically the same, i.e. are identical, and
R is a bridging group linking two ligands L,
wherein R is defined by the formula (II)

$$-Y(R')_2- \qquad (II)$$

wherein
Y is C, Si or Ge, and
R' is $C_1$ to $C_{20}$ alkyl, $C_6$-$C_{12}$ aryl, or $C_7$-$C_{12}$ arylalkyl.

More preferably the symmetric catalyst is defined by the formula (III), wherein both Cp are selected from the group consisting of substituted cyclopenadienyl, substituted indenyl, substituted tetrahydroindenyl, and substituted fluorenyl.

In a preferred embodiment the symmetric catalyst is dimethylsilyl(2-methyl-4-phenyl-indenyl)$_2$zirkonium dichloride. More preferred said symmetric catalyst is non-silica supported.

The above described symmetric catalyst components are prepared according to the methods described in WO 01/48034.

It is in particular preferred that the symmetric catalyst is obtainable by the emulsion solidification technology as described in WO 03/051934. This document is herewith included in its entirety by reference. Hence the symmetric catalyst is preferably in the form of solid catalyst particles, obtainable by a process comprising the steps of

a) preparing a solution of one or more symmetric catalyst components;

b) dispersing said solution in a solvent immiscible therewith to form an emulsion in which said one or more catalyst components are present in the droplets of the dispersed phase,

c) solidifying said dispersed phase to convert said droplets to solid particles and optionally recovering said particles to obtain said catalyst.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or -cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$ alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 ˚C/min, preferably 0.5 to 6 ˚C/min and more preferably 1 to 5 ˚C/min. Even more preferred the emulsion is subjected to a temperature change of more than 40 ˚C, preferably more than 50 ˚C within less than 10 seconds, preferably less than 6 seconds.

The recovered particles have preferably an average size range of 5 to 200 µm, more preferably 10 to 100 µm.

Moreover, the form of solidified particles have preferably a spherical shape, a predetermined particles size distribution and a surface area as mentioned above of preferably less than 25 m$^2$/g, still more preferably less than 20 m$^2$/g, yet more preferably less than 15 m$^2$/g, yet still more preferably less than 10 m$^2$/g and most preferably less than 5 m$^2$/g, wherein said particles are obtained by the process as described above.

For further details, embodiments and examples of the continuous and dispersed phase system, emulsion formation method, emulsifying agent and solidification methods reference is made e.g. to the above cited international patent application WO 03/051934.

The above described symmetric catalyst components are prepared according to the methods described in WO 01/48034.

As mentioned above the catalyst system may further comprise an activator as a cocatalyst, as described in WO 03/051934, which is enclosed herein with reference.

Preferred as cocatalysts for metallocenes and non-metallocenes, if desired, are the aluminoxanes, in particular

**EP 1 882 703 B2**

the $C_1$-$C_{10}$-alkylaluminoxanes, most particularly methylaluminoxane (MAO). Such aluminoxanes can be used as the sole cocatalyst or together with other cocatalyst(s). Thus besides or in addition to aluminoxanes, other cation complex forming catalysts activators can be used. Said activators are commercially available or can be prepared according to the prior art literature.

Further aluminoxane cocatalysts are described i.a. in WO 94/28034 which is incorporated herein by reference. These are linear or cyclic oligomers of having up to 40, preferably 3 to 20, -(Al(R''')O)- repeat units (wherein R''' is hydrogen, $C_1$-$C_{10}$-alkyl (preferably methyl) or $C_6$-$C_{18}$-aryl or mixtures thereof).

The use and amounts of such activators are within the skills of an expert in the field. As an example, with the boron activators, 5:1 to 1:5, preferably 2:1 to 1:2, such as 1:1, ratio of the transition metal to boron activator may be used. In case of preferred aluminoxanes, such as methylaluminumoxane (MAO), the amount of AI, provided by aluminoxane, can be chosen to provide a molar ratio of AI:transition metal e.g. in the range of 1 to 10 000, suitably 5 to 8000, preferably 10 to 7000, e.g. 100 to 4000, such as 1000 to 3000. Typically in case of solid (heterogeneous) catalyst the ratio is preferably below 500.

The quantity of cocatalyst to be employed in the catalyst of the invention is thus variable, and depends on the conditions and the particular transition metal compound chosen in a manner well known to a person skilled in the art.

Any additional components to be contained in the solution comprising the organotransition compound may be added to said solution before or, alternatively, after the dispersing step.

Furthermore, the present invention is related to the use of the above-defined catalyst system for the production of a polypropylene according to this invention.

In addition, the present invention is related to the process for producing the inventive polypropylene, whereby the catalyst system as defined above is employed. Furthermore it is preferred that the process temperature is higher than 60 ˚C. Preferably, the process is a multi-stage process to obtain multimodal polypropylene as defined above.

Multistage processes include also bulk/gas phase reactors known as multizone gas phase reactors for producing multimodal propylene polymer.

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379 and WO 97/22633.

A multimodal polypropylene according to this invention is produced preferably in a multi-stage process in a multi-stage reaction sequence as described in WO 92/12182. The contents of this document are included herein by reference.

It has previously been known to produce multimodal, in particular bimodal, polypropylene in two or more reactors connected in series, i.e. in different steps (a) and (b).

According to the present invention, the main polymerization stages are preferably carried out as a combination of a bulk polymerization/gas phase polymerization.

The bulk polymerizations are preferably performed in a so-called loop reactor.

In order to produce the multimodal polypropylene according to this invention, a flexible mode is preferred. For this reason, it is preferred that the composition be produced in two main polymerization stages in combination of loop reactor/gas phase reactor.

Optionally, and preferably, the process may also comprise a prepolymerization step in a manner known in the field and which may precede the polymerization step (a).

If desired, a further elastomeric comonomer component, so called ethylene-propylene rubber (EPR) component as in this invention, may be incorporated into the obtained polypropylene homopolymer matrix to form a propylene copolymer as defined above. The ethylene-propylene rubber (EPR) component may preferably be produced after the gas phase polymerization step (b) in a subsequent second or further gas phase polymerizations using one or more gas phase reactors.

The process is preferably a continuous process.

Preferably, in the process for producing the propylene polymer as defined above the conditions for the bulk reactor of step (a) may be as follows:

- the temperature is within the range of 40 ˚C to 110 ˚C, preferably between 60 ˚C and 100 ˚C, 70 to 90 ˚C,

- the pressure is within the range of 20 bar to 80 bar, preferably between 30 bar to 60 bar,

- hydrogen can be added for controlling the molar mass in a manner known per se.

Subsequently, the reaction mixture from the bulk (bulk) reactor (step a) is transferred to the gas phase reactor, i.e. to step (b), whereby the conditions in step (b) are preferably as follows:

- the temperature is within the range of 50 ˚C to 130 ˚C, preferably between 60 ˚C and 100 ˚C,

- the pressure is within the range of 5 bar to 50 bar, preferably between 15 bar to 35 bar,

- hydrogen can be added for controlling the molar mass in a manner known per se.

The residence time can vary in both reactor zones. In one embodiment of the process for producing the propylene polymer the residence time in bulk reactor, e.g. loop is in the range 0.5 to 5 hours, e.g. 0.5 to 2 hours and the residence time in gas phase reactor will generally be 1 to 8 hours.

If desired, the polymerization may be effected in a known manner under supercritical conditions in the bulk, preferably loop reactor, and/or as a condensed mode in the gas phase reactor.

The process of the invention or any embodiments thereof above enable highly feasible means for producing and further tailoring the propylene polymer composition within the invention, e.g. the properties of the polymer composition can be adjusted or controlled in a known manner e.g. with one or more of the following process parameters: temperature, hydrogen feed, comonomer feed, propylene feed e.g. in the gas phase reactor, catalyst, the type and amount of an external donor (if used), split between components.

The above process enables very feasible means for obtaining the reactor-made polypropylene as defined above.

In the following, the present invention is described by way of examples.

**Examples**

**1. Definitions/Measuring Methods**

The following definitions of terms and determination methods apply for the above general description of the invention as well as to the below examples unless otherwise defined.

**A. Pentad Concentration**

For the meso pentad concentration analysis, also referred herein as pentad concentration analysis, the assignment analysis is undertaken according to T Hayashi, Pentad concentration, R. Chujo and T. Asakura, Polymer 29 138-43 (1988) and Chujo R, et al., Polymer 35 339 (1994)

**B. Multi-branching Index**

**1. Acquiring the experimental data**

Polymer is melted at T=180 ˚C and stretched with the SER Universal Testing Platform as described below at deformation rates of $d\varepsilon/dt$=0.1 0.3 1.0 3.0 and 10 $s^{-1}$ in subsequent experiments. The method to acquire the raw data is described in Sentmanat et al., J. Rheol. 2005, Measuring the Transient Elongational Rheology of Polyethylene Melts Using the SER Universal Testing Platform.

**Experimental Setup**

A Paar Physica MCR300, equipped with a TC30 temperature control unit and an oven CTT600 (convection and radiation heating) and a SERVP01-025 extensional device with temperature sensor and a software RHEO-PLUS/32 v2.66 is used.

**Sample Preparation**

Stabilized Pellets are compression moulded at 220˚C (gel time 3min, pressure time 3 min, total moulding time 3+3=6min) in a mould at a pressure sufficient to avoid bubbles in the specimen, cooled to room temperature. From such prepared plate of 0.7mm thickness, stripes of a width of 10mm and a length of 18mm are cut.

**Check of the SER Device**

Because of the low forces acting on samples stretched to thin thicknesses, any essential friction of the device would deteriorate the precision of the results and has to be avoided.

In order to make sure that the friction of the device less than a threshold of 5x10-3 mNm (Milli-Newtonmeter) which is required for precise and correct measurements, following check procedure is performed prior to each measurement:

- The device is set to test temperature (180˚C) for minimum 20minutes without sample in presence of the clamps

- A standard test with 0.3s-1 is performed with the device on test temperature (180˚C)

- The torque (measured in mNm) is recorded and plotted against time

- The torque must not exceed a value of 5x10-3 mNm to make sure that the friction of the device is in an acceptably low range

**Conducting the experiment**

The device is heated for min. 20min to the test temperature (180˚C measured with the thermocouple attached to the SER device) with clamps but without sample. Subsequently, the sample (0.7x10x18mm), prepared as described above, is clamped into the hot device. The sample is allowed to melt for 2 minutes +/- 20 seconds before the experiment is started.

During the stretching experiment under inert atmosphere (nitrogen) at constant Hencky strain rate, the torque is recorded as function of time at isothermal conditions (measured and controlled with the thermocouple attached to the SER device).

After stretching, the device is opened and the stretched film (which is winded on the drums) is inspected. Homogenous extension is required. It can be judged visually from the shape of the stretched film on the drums if the sample stretching has been homogenous or not. The tape must me wound up symmetrically on both drums, but also symmetrically in the upper and lower half of the specimen.

If symmetrical stretching is confirmed hereby, the transient elongational viscosity calculates from the recorded torque as outlined below.

**2. Evaluation**

For each of the different strain rates dε/dt applied, the resulting tensile stress growth function $\eta_E^+$ (dε/dt, t) is plotted against the total Hencky strain $\varepsilon$ to determine the strain hardening behaviour of the melt, see Figure 1.

In the range of Hencky strains between 1.0 and 3.0, the tensile stress growth function $\eta_E^+$ can be well fitted with a function

$$\eta_E^+(\dot{\varepsilon}, \varepsilon) = c_1 \cdot \varepsilon^{c_2}$$

where $c_1$ and $c_2$ are fitting variables. Such derived $c_2$ is a measure for the strain hardening behavior of the melt and called Strain Hardening Index *SHI*.

Dependent on the polymer architecture, *SHI* can

- be independent of the strain rate (linear materials, Y- or H-structures)

- increase with strain rate (short chain-, hyper- or multi-branched structures).

This is illustrated in Figure 2.

For polyethylene, linear (HDPE), short-chain branched (LLDPE) and hyperbranched structures (LDPE) are well known and hence they are used to illustrate the structural analytics based on the results on extensional viscosity. They are compared with a polypropylene with Y and H-structures with regard to their change of the strain-hardening behavior as function of strain rate, see Figure 2 and Table 1.

To illustrate the determination of *SHI* at different strain rates as well as the multi-branching index (*MBI*) four polymers of known chain architecture are examined with the analytical procedure described above.

The first polymer is a H- and Y-shaped polypropylene homopolymer made according to EP 879 830 ("A"). It has a MFR230/2.16 of 2.0g/10min, a tensile modulus of 1950MPa and a branching index g' of 0.7.

The second polymer is a commercial hyperbranched LDPE, Borealis "B", made in a high pressure process known in the art. It has a MFR190/2.16 of 4.5 and a density of 923kg/m$^3$.

The third polymer is a short chain branched LLDPE, Borealis "C", made in a low pressure process known in the art. It has a MFR190/2.16 of 1.2 and a density of 919kg/m$^3$.

The fourth polymer is a linear HDPE, Borealis "D", made in a low pressure process known in the art. It has a MFR190/2.16 of 4.0 and a density of 954kg/m$^3$.

The four materials of known chain architecture are investigated by means of measurement of the transient elongational viscosity at 180˚C at strain rates of 0.10, 0.30, 1.0, 3.0 and 10s$^{-1}$. Obtained data (transient elongational viscosity versus Hencky strain) is fitted with a function

$$\eta_E^+ = c_1 * \varepsilon^{c_2}$$

for each of the mentioned strain rates. The parameters c1 and c2 are found through plotting the logarithm of the transient elongational viscosity against the logarithm of the Hencky strain and performing a linear fit of this data applying the least square method. The parameter c1 calculates from the intercept of the linear fit of the data $lg(\eta_E^+)$ versus $lg(\varepsilon)$ from

$$c_1 = 10^{Intercept}$$

and $c_2$ is the strain hardening index (*SHI*) at the particular strain rate.

This procedure is done for all five strain rates and hence, SHI@0.1s$^{-1}$, *SHI@0.3s$^{-1}$*, *SHI@1.0s$^{-1}$*, *SHI@3.0s$^{-1}$*, *SHI@10s$^{-1}$* are determined, see Figure 1.

| dε/dt | lg (dε/dt) | Property | Y and H branched | multibranched | short-chain branched | linear |
|---|---|---|---|---|---|---|
| | | | A | B | C | D |
| 0,1 | -1,0 | SHI@0.1s$^{-1}$ | 2,05 | - | 0,03 | 0,03 |
| 0,3 | -0,5 | SHI@0.3s$^{-1}$ | - | 1,36 | 0,08 | 0,03 |
| 1 | 0,0 | SHI@1.0s$^{-1}$ | 2,19 | 1,65 | 0,12 | 0,11 |
| 3 | 0,5 | SHI@3.0s$^{-1}$ | - | 1,82 | 0,18 | 0,01 |
| 10 | 1,0 | SHI@10s$^{-1}$ | 2,14 | 2,06 | - | - |

From the strain hardening behaviour measured by the values of the *SHI@1s$^{-1}$* one can already clearly distinguish between two groups of polymers: Linear and short-chain branched have a *SHI@1s$^{-1}$* significantly smaller than 0.30. In contrast, the Y and H-branched as well as hyperbranched materials have a *SHI@1s$^{-1}$* significantly larger than 0.30.

In comparing the strain hardening index at those five strain rates $\dot{\varepsilon}_H$ of 0.10, 0.30, 1.0, 3.0 and 10s$^{-1}$, the slope of *SHI* as function of the logarithm of $\dot{\varepsilon}_H$, $lg(\dot{\varepsilon}_H)$ is a characteristic measure for multi - branching. Therefore, a multi-branching index (*MBI*) is calculated from the slope of a linear fitting curve of *SHI* versus $lg(\dot{\varepsilon}_H)$:

$$SHI(\dot{\varepsilon}_H) = c3 + MBI*lg(\dot{\varepsilon}_H)$$

The parameters c3 and *MBI* are found through plotting the *SHI* against the logarithm of the Hencky strain rate $lg(\dot{\varepsilon}_H)$ and performing a linear fit of this data applying the least square method. Please confer to Figure 2.

| Property | Y and H branched | multibranched | short-chain branched | linear |
|---|---|---|---|---|
| | A | B | C | D |
| MBI | 0,04 | 0,45 | 0,10 | 0,01 |

The multi-branching index *MBI* allows now to distinguish between Y or H-branched polymers which show a *MBI* smaller than 0.05 and hyperbranched polymers which show a *MBI* larger than 0.15. Further, it allows to distinguish between short-chain branched polymers with *MBI* larger than 0.10 and linear materials which have a *MBI* smaller than 0.10.

Combining both, strain hardening index and multi-branching index, the chain architecture can be assessed as indicated in Table 3:

Table 3: Strain Hardening Index (SHI) and Multi-branching Index (MBI) for various chain architectures

| Property | Y and H branched | Multi-branched | short-chain branched | linear |
|---|---|---|---|---|
| SHI@1.0s$^{-1}$ | >0.30 | >0.30 | ≤0.30 | ≤0.30 |
| MBI | ≤0.10 | >0.10 | >0.10 | ≤0.10 |

**C. Elementary Analysis**

The below described elementary analysis is used for determining the content of elementary residues which are mainly originating from the catalyst, especially the Al-, B-, and Si-residues in the polymer. Said Al-, B- and Si-residues can be in any form, e.g. in elementary or ionic form, which can be recovered and detected from polypropylene using the below described ICP-method. The method can also be used for determining the Ti-content of the polymer. It is understood that also other known methods can be used which would result in similar results.

**ICP-Spectrometry (Inductively Coupled Plasma Emission)**

**ICP-instrument:** The instrument for determination of Al-, B- nad Si-content is ICP Optima 2000 DV, PSN 620785 (supplier Perkin Elmer Instruments, Belgium) with software of the instrument.
Detection limits are 0.10 ppm (Al), 0.10 ppm (B), 0.10 ppm (Si).
The polymer sample was first ashed in a known manner, then dissolved in an appropriate acidic solvent. The dilutions of the standards for the calibration curve are dissolved in the same solvent as the sample and the concentrations chosen so that the concentration of the sample would fall within the standard calibration curve.
**ppm:** means parts per million by weight
**Ash content:** Ash content is measured according to ISO 3451-1 (1997) standard.

**Calculated ash, Al- Si- and B-content:**

The ash and the above listed elements, Al and/or Si and/or B can also be calculated form a polypropylene based on the polymerization activity of the catalyst as exemplified in the examples. These values would give the upper limit of the presence of said residues originating form the catalyst.
Thus the estimate catalyst residue is based on catalyst composition and polymerization productivity, catalyst residues in the polymer can be estimated according to:

$$\text{Total catalyst residues [ppm]} = 1 \, / \, \text{productivity} \, [\text{kg}_{pp}/\text{g}_{catalyst}] \times 100$$

$$\text{Al residues [ppm]} = w_{Al, \, catalyst} \, [\%] \times \text{total catalyst residues [ppm]} \, / \, 100$$

$$\text{Zr residues [ppm]} = w_{Zr, \, catalyst} \, [\%] \times \text{total catalyst residues [ppm]} \, / \, 100$$

(Similar calculations apply also for B, Cl and Si residues)

**Chlorine residues content:** The content of Cl-residues is measured from samples in the known manner using X-ray fluorescence (XRF) spectrometry. The instrument was X-ray fluorescention Philips PW2400, PSN 620487, (Supplier: Philips, Belgium) software X47. Detection limit for Cl is 1 ppm.

**D. Further Measuring Methods**

Particle size distribution: Particle size distribution is measured via Coulter Counter LS 200 at room temperature with n-heptane as medium.

**NMR**

**NMR-spectroscopy measurements:**

The $^{13}$C-NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988).and Chujo R, et al,Polymer 35 339 (1994).

The NMR-measurement was used for determining the mmmm pentad concentration in a manner well known in the art.

**Number average molecular weight ($M_n$), weight average molecular weight ($M_w$) and molecular weight distribution (MWD)** are determined by size exclusion chromatography (SEC) using Waters Alliance GPCV 2000 instrument with online viscometer. The oven temperature is 140 °C. Trichlorobenzene is used as a solvent (ISO 16014).

**The xylene solubles (XS, wt.-%):** Analysis according to the known method: 2.0 g of polymer is dissolved in 250 ml p-xylene at 135°C under agitation. After 30±2 minutes the solution is allowed to cool for 15 minutes at ambient temperature and then allowed to settle for 30 minutes at 25±0.5°C. The solution is filtered and evaporated in nitrogen flow and the residue dried under vacuum at 90 °C until constant weight is reached.

$$XS\% = (100 \times m_1 \times v_0) / (m_0 \times v_1),$$

wherein
$m_0$ = initial polymer amount (g)
$m_1$ = weight of residue (g)
$v_0$ = initial volume (ml)
$V_1$ = volume of analyzed sample (ml)

**Melting temperature Tm, crystallization temperature Tc, and the degree of crystallinity:** measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy (**Hm and Hc**) were measured by the DSC method according to ISO 11357-3.

**Stepwise Isothermal Segregation Technique (SIST):** The isothermal crystallisation for SIST analysis was performed in a Mettler TA820 DSC on 3±0.5 mg samples at decreasing temperatures between 200°C and 105°C.

(i) The samples were melted at 225 °C for 5 min.,

(ii) then cooled with 80 °C/min to 145 °C

(iii) held for 2 hours at 145 °C,

(iv) then cooled with 80 °C/min to 135 °C

(v) held for 2 hours at 135 °C,

(vi) then cooled with 80 °C/min to 125 °C

(vii) held for 2 hours at 125 °C,

(viii) then cooled with 80 °C/min to 115 °C

(ix) held for 2 hours at 115 °C,

(x) then cooled with 80 ˚C/min to 105 ˚C

(xi) held for 2 hours at 105 ˚C.

After the last step the sample was cooled down to ambient temperature, and the melting curve was obtained by heating the cooled sample at a heating rate of 10˚C/min up to 200˚C. All measurements were performed in a nitrogen atmosphere. The melt enthalpy is recorded as function of temperature and evaluated through measuring the melt enthalpy of fractions melting within temperature intervals as indicated in the table 4

The melting curve of the material crystallised this way can be used for calculating the lamella thickness distribution according to Thomson-Gibbs equation (Eq 1.).

$$T_m = T_0\left(1 - \frac{2\sigma}{\Delta H_0 \cdot L}\right) \quad (1)$$

where $T_0$=457K, $\Delta H_0$ =184x10$^6$ J/m$^3$, $\sigma$ =0,049.6 J/m$^2$ and L is the lamella thickness.

**MFR$_2$:** measured according to ISO 1133 (230˚C, 2.16 kg load).

Comonomer content is measured with Fourier transform infrared spectroscopy (FTIR) calibrated with $^{13}$C-NMR. When measuring the ethylene content in polypropylene, a thin film of the sample (thickness about 250 mm) was prepared by hot-pressing. The area of -CH$_2$- absorption peak (800-650 cm$^{-1}$) was measured with Perkin Elmer FTIR 1600 spectrometer. The method was calibrated by ethylene content data measured by $^{13}$C-NMR.

**Stiffness Film TD (transversal direction), Stiffness Film MD (machine direction), Elongation at break TD and Elongation at break MD:** these are determined according to ISO527-3 (cross head speed: 1 mm/min).

**Haze and transparency:** are determined according to ASTM D1003-92 (haze).

**Intrinsic viscosity:** is measured according to DIN ISO 1628/1, October 1999 (in Decalin at 135 ˚C).

**Porosity:** is measured according to DIN 66135

**Surface area:** is measured according to ISO 9277

### 3. Examples

**Inventive Example 1 (I 1)**

### Catalyst preparation

The catalyst was prepared as described in example 5 of WO 03/051934, with the Al- and Zr-ratios as given in said example (Al/Zr = 250).

### Catalyst characteristics:

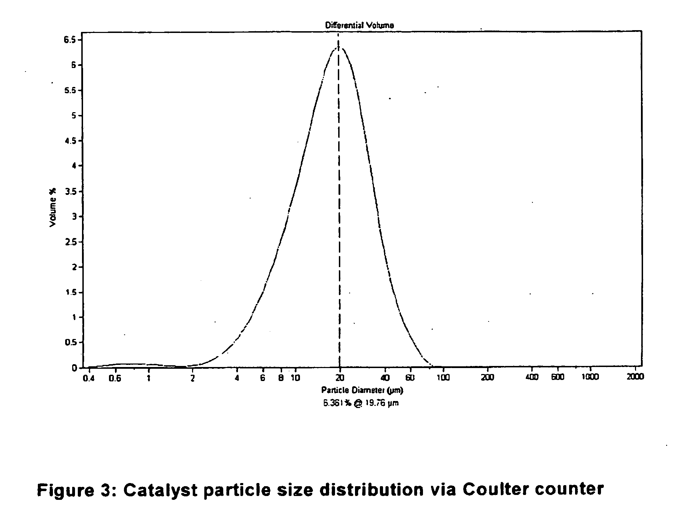

Al- and Zr- content were analyzed via above mentioned method to 36,27 wt.-% Al and 0,42 %-wt. Zr. The average particle diameter (analyzed via Coulter counter) is 20 $\mu$m and particle size distribution is shown in Fig. 3.

### Polymerization

A 5 liter stainless steel reactor was used for propylene polymerizations. 1100 g of liquid propylene (Borealis polymerization grade) was fed to reactor. 0.2 ml triethylaluminum (100%, purchased from Crompton) was fed as a scavenger and 15 mmol hydrogen (quality 6.0, supplied by Aga) as chain transfer agent. Reactor temperature was set to 30 ˚C. 29.1 mg catalyst were flushed into to the reactor with nitrogen overpressure. The reactor was heated up to 70 ˚C in a period of about 14 minutes. Polymerization was continued for 50 minutes at 70 ˚C, then propylene was flushed out, 5 mmol hydrogen were fed and the reactor pressure was increased to 20 bars by feeding (gaseous-) propylene. Polymerization continued in gas-phase for 144 minutes, then the reactor was flashed, the polymer was dried and weighted.

Polymer yield was weighted to 901 g, that equals a productivity of 31 kg$_{PP}$/g$_{catalyst}$. 1000ppm of a commercial stabilizer Irganox B 215 (FF) (Ciba) have been added to the powder. The powder has been melt compounded with a Prism TSE16 lab kneader at 250rpm at a temperature of 220-230˚C.

**Inventive Example 2 (I 2)**

A catalyst as used in I1 has been used.

A 5 liter stainless steel reactor was used for propylene polymerizations. 1100 g of liquid propylene (Borealis polymerization grade) was fed to reactor. 0.5 ml triethylaluminum (100%, purchased from Crompton) was fed as a scavenger and 50 mmol hydrogen (quality 6.0, supplied by Aga) as chain transfer agent. Reactor temperature was set to 30 ˚C. 19.9 mg catalyst were flushed into to the reactor with nitrogen overpressure. The reactor was heated up to 70 ˚C in a period of about 14 minutes. Polymerization was continued for 40 minutes at 70 ˚C, then propylene was flushed out, the reactor pressure was increased to 20 bars by feeding (gaseous-) propylene. Polymerization continued in gas-phase for 273 minutes, then the reactor was flashed, the polymer was dried and weighted.

Polymer yield was weighted to 871 g, that equals a productivity of 44 $kg_{PP}/g_{catalyst}$. 1000ppm of a commercial stabilizer Irganox B 215 (FF) (Ciba) have been added to the powder. The powder has been melt compounded with a Prism TSE16 lab kneader at 250rpm at a temperature of 220-230˚C.

**Inventive Example 3 (I 3)**

50wt% I3a have been mixed with 50wt% I3b before compounding and pelletizing to obtain a bimodal polypropylene from melt blending with a Prism TSE16 lab kneader at 250rpm at a temperature of 220-230˚C.

**Polymerisation procedure I 3a:**

The same catalyst as in example I1 has been used.

A 20 liter stainless steel reactor was used for propylene polymerization. 1000 g of liquid propylene (Borealis polymerization grade) was fed to reactor. 0.4 ml triethylaluminum (100% (purchased from Crompton), added as 1 molar solution in hexane)) was fed as a scavenger and 60 mmol hydrogen (quality 6.0, supplied by Aga) as chain transfer agent using propylene as spilling agent (250 resp. 500g). Reactor temperature was set to 13 ˚C. 73.4 mg catalyst was flushed into to the reactor with 250g liquid propylene. The catalyst was prepolymerized for 10min. Then the reactor was heated up to 70 ˚C in a period of about 15 minutes adding additional 2470g propylene. Polymerization was continued for 30 minutes at 70 ˚C. After that propylene was flashed and the polymer dried and weighed.

Polymer yield was 1185 g, equalling a productivity of 16,14 kg PP/gcatalyst. 1000ppm of a commercial stabilizer Irganox B 215 (FF) (Ciba) have been added to the powder.

**Polymerisation procedure I 3b:**

The same catalyst as in example I1 has been used.

A 20 liter stainless steel reactor was used for propylene polymerization. 1000 g of liquid propylene (Borealis polymerization grade) was fed to reactor. 0.4 ml triethylaluminum (100% (purchased from Crompton), added as 1 molar solution in hexane)) was fed as a scavenger and 60 mmol hydrogen (quality 6.0, supplied by Aga) as chain transfer agent using propylene as spilling agent (250 resp. 500g). Reactor temperature was set to 14 ˚C. 70.9 mg catalyst, contacted with 1.8ml white mineral oil (PRIMOL 352 D / Esso) for 15min, was flushed into to the reactor with 250g liquid propylene. The catalyst was prepolymerized for 10min. Then the reactor was heated up to 70 ˚C in a period of about 17 minutes adding additional 2470g propylene and 413mmol H2. Polymerization was continued for 30 minutes at 70 ˚C After that propylene was flashed and the polymer dried and weighed.

Polymer yield was 1334 g, equalling a productivity of 18.82 kg PP/gcatalyst. 1000ppm of a commercial stabilizer Irganox B 215 (FF) (Ciba) have been added to the powder.

**Comparative Example 1 (C 1)**

A silica supported metallocene catalyst (I) was prepared according to WO 01/48034 (example 27). The porosity of the support is 1.6 ml/g. An asymmetric metallocene dimethylsilyl [(2-methyl-(4'-tert.butyl)-4-phenyl-indenyl)(2-isopropyl-(4'-tert.butyl)-4-phenyl-indenyl)]zirconium dichloride has been used.

A 20 liter stainless steel reactor was used for propylene homopolymerization. 4470g of liquid propylene (Borealis polymerization grade) was fed to reactor. 0.4 ml triethylaluminum (100% (purchased from Crompton), added as 1 molar solution in hexane) was fed as a scavenger and 4 mmol hydrogen (quality 6.0, supplied by Aga) as chain transfer agent using propylene as spilling agent (250g). Reactor temperature was set to 30˚C and the reactor pressurized with N2 to 25bar. 214 mg catalyst was flushed into to the reactor via N2 (increasing pressure about 0.9 bar in the reactor). After that the reactor temperature control was set up to 70˚C. Polymerization was continued for 30 minutes at 70 ˚C. Then monomers were flashed and the polymer was dried and weighed.

Polymer yield was 656 g, equalling a productivity of 3 kg PP/gcatalyst. 000ppm of a commercial stabilizer Irganox B 215 (FF) (Ciba) have been added to the powder. The powder has been melt compounded with a Prism TSE16 lab kneader at 250rpm at a temperature of 220-230˚C.

**Comparative Example 2 (C 2)**

A commercial polypropylene homopolymer of Borealis has been used.

**Comparative Example 3 (C 3)**

A commercial Polypropylene homopolymer of Borealis has been used.
In Tables 1, 2 and 3, the properties of samples C1-C3 and 11-13 are summarized. Furthermore, Table 1 provides an evaluation of processing properties, stiffness and heat resistance.

**Table 1:** Properties of polypropylene according to the invention and comparative examples

| Sample | Type | SHI | XS (wt%) | Processing | Stiffness | Heat Res. |
|--------|------|-----|----------|------------|-----------|-----------|
| C1 | Homo-PP, unimodal, prepared with single site catalyst on silica support | n/a | X | - | n/a | + |
| C2 | Homo-PP, prepared with Ziegler-Natta catalyst | 0 | 3.26 | ~ | + | + |
| C3 | Homo-PP, prepared with Zlegler-Natta catalyst | n/a | 1,39 | ~ | + | + |
| I1 | Homo-PP, prepared with single site catalyst on non-silica support with low rosity | 0,15 | 0,85 | + | + | + |
| I2 | Homo-PP, prepared with single site catalyst on non-silica support with low porosity | n/a | 0,66 | + | n/a | + |
| I3 | Homo-PP, prepared with single site catalyst on non-silica support with low porosity | 0,27 | 0,61 | + | + | + |

**Table 2:** Properties of polypropylene according to the invention and comparative examples

| Sample | SHI@1.0s$^{-1}$ | MBI | g' | Al [ppm] | B [ppm] |
|--------|------------|-----|-----|----------|---------|
| C1 | 0 | < 0.1 | 1 | 79 | 0 |
| C2 | 0 | < 0.1 | 1 | n/a | 0 |
| C3 | 0 | < 0.1 | 1 | 1-2 | 0 |
| I1 | 0.15 | 0.20 | 0,9 | 11 | 0 |
| I2 | n/a | n/a | 0,8 | 14 | 0 |
| I3 | 0.27 | 0.27 | 0,9 | 24 | 0 |

**Table 3:** Material Data

| | Tm[1] | Tc[2] | Hm[3] | Hc[4] | XS | Mw | Mn | MWD | IV |
|------|------|------|------|------|------|--------|--------|-----|------|
| Unit | ˚C | ˚C | J/g | J/g | wt% | kg/mol | kg/mol | - | ml/g |
| C 1 | 156,1 | 107,2 | 95,7 | 90,7 | X | 443 | 163 | 2,7 | 265 |
| C 2 | 162,6 | 110,7 | 103,6 | 97,6 | 3,26 | 506 | 110 | 4,6 | 306 |
| C 3 | 163,2 | 112,6 | 107,1 | 104 | 1,39 | 628 | 73 | 8,6 | 366 |
| I 1 | 150,6 | 111,9 | 99,5 | 74,6 | 0,85 | 453 | 162 | 2,8 | 246 |
| I 2 | 150,8 | 111,2 | 100,1 | 92,8 | 0,66 | 405 | 76 | 5,3 | 207 |

(continued)

| Unit | Tm[1] | Tc[2] | Hm[3] | Hc[4] | XS | Mw | Mn | MWD | IV |
|---|---|---|---|---|---|---|---|---|---|
| | °C | °C | J/g | J/g | wt% | kg/mol | kg/mol | - | ml/g |
| I 3 | 153,2 | 112,7 | 105,7 | 97,4 | 0,61 | 453 | 77 | 5,9 | 240 |

[1]Tm: Melting temperature
[2]Tc: Crystallization temperature
[3]Hm: Melting enthalpy
[4]Hc: Crystallization enthalpy

In Table 4, the crystallization behaviour of samples C3, I1 and I2 is determined via stepwise isothermal segregation technique (SIST).

**Table 4:** Results from stepwise isothermal segregation technique (SIST)

| | | I1 | I2 | C 3 |
|---|---|---|---|---|
| Peak ID | Range [°C] | $H_m$ [J/g] | $H_m$ [J/g] | $H_m$ [J/g] |
| 1 | <110 | 6,0 | 4,3 | 0,6 |
| 2 | 110-120 | 3,8 | 3,1 | 1,0 |
| 3 | 120-130 | 4,8 | 5,9 | 2,0 |
| 4 | 130-140 | 11,4 | 13,3 | 3,9 |
| 5 | 140-150 | 27,5 | 38,2 | 10,6 |
| 6 | 150-160 | 29,2 | 42,3 | 25,4 |
| 7 | 160-170 | 16,9 | 10,9 | 50,7 |
| 8 | >170 | 0,1 | 0,0 | 37,5 |

$H_m$= melting enthalpy

A biaxially oriented film is prepared as follows:

In the biaxial stretching Device Bruckner Karo IV, film samples are clamped and extended in both, longitudinal and transverse direction, at constant stretching speed. The length of the sample increases during stretching in longitudinal direction and the stretch ratio in longitudinal direction calculates from the ratio of current length over original sample length. Subsequently, the sample is stretched in transverse direction where the width of the sample is increasing. Hence, the stretch ratio calculates from the current width of the sample over the original width of the sample.

In Table 5, the stretching properties of samples 11-13 and C1-C3 are summarized.

**Table 5: Stretching Properties**

| Unit | Stretch T | Stress MD4[1] | Stress TD4[2] | Stress MD5[3] | Stress TD5[4] |
|---|---|---|---|---|---|
| | °C | MPa | MPa | MPa | MPa |
| **C1** | 152 | break | break | break | break |
| C2 | 158 | 3,44 | 2,94 | 4,94 | 3,92 |
| C3 | 158 | 4,27 | 3,43 | 5,31 | 4,20 |
| **I1** | 147 | 3,59 | 3,02 | n/a | n/a |
| **I2** | 147 | 2,69 | 2,53 | 3,51 | 3,40 |
| **I3** | 150 | 2,74 | 2,89 | 3,09 | 3,55 |

[1]Stress MD4: Stretching stress in machine direction at a draw ratio of 4
[2]Stress TD4: Stretching stress in transverse direction at a draw ratio of 4
[3]Stress MD5: Stretching stress in machine direction at a draw ratio of 5
[4]Stress TD5: Stretching stresse in transverse direction at a draw ratio of 5

In Table 6, the properties of the biaxially oriented polypropylene films prepared from samples I1-I3 and C1-C3 are summarized.

**Table 6: Biaxially oriented PP film properties**

|  | Tensile Modulus | Tensile Strength | Tensile Strain at Strength | Work at Strength | Tensile Stress at Break | Tensile Strain at Break | Work at Break |
|---|---|---|---|---|---|---|---|
| Unit | MPa | MPa | % | J | MPa | % | J |
| C1 | 2118 | 84 | 140 | 8,2 | 82 | 142 | 8,3 |
| C2 | 2953 | 188 | 49 | 3,7 | 187 | 51 | 3,9 |
| C3 | 3003 | 192 | 52 | 4,0 | 192 | 52 | 4,0 |
| I1 | 2550 | 146 | 79 | 3,9 | 142 | 80 | 3,9 |
| I2 | 2020 | 115 | 59 | 2,5 | 107 | 62 | 2,6 |
| I3 | 2523 | n/a | n/a | n/a | n/a | 82 | n/a |

**Claims**

1.  Polypropylene having

    a) xylene solubles (XS) of at least 0.5 wt.-% and
    b) a strain hardening index (SHI@1s$^{-1}$) in the range of 0.15 to 0.30 measured by a deformation rate d$\varepsilon$/dt of 1.00 s$^{-1}$ at a temperature of 180 ˚C, wherein the strain hardening index (SHI) is defined as the slope of the logarithm to the basis 10 of the tensile stress growth function (lg ($\eta_E^+$)) as function of the logarithm to the basis 10 of the Hencky strain (lg ($\varepsilon$)) in the range of the Hencky strains between 1 and 3.

2.  Polypropylene according to claim 1, wherein the polypropylene has xylene solubles (XS) in the range of 0.5 to 1.5 wt.-%.

3.  Polypropylene according to any one of the preceding claims, wherein the polypropylene has a melting point Tm of at least 148 ˚C.

4.  Polypropylene according to any one of the preceding claims, wherein the polypropylene has a multi-branching index (MBI) of at least 0.10, wherein the multi-branching index (MBI) is defined as the slope of strain hardening index (SHI) as function of the logarithm to the basis 10 of the Hencky strain rate (lg (d$\varepsilon$/dt)), wherein

    a) d$\varepsilon$/dt is the deformation rate,
    b) $\varepsilon$ is the Hencky strain, and
    c) the strain hardening index (SHI) is measured at a temperature of 180 ˚C, wherein the strain hardening index (SHI) is defined as the slope of the logarithm to the basis 10 of the tensile stress growth function (lg ($\eta_E^+$)) as function of the logarithm to the basis 10 of the Hencky strain (lg ($\varepsilon$)) in the range of the Hencky strains between 1 and 3.

5.  Polypropylene according to any one of the preceding claims, wherein the polypropylene has a branching index g' of less than 1.00.

6.  Polypropylene according to any one of the preceding claims, wherein the polypropylene is multimodal.

7.  Polypropylene according to any one of the preceding claims 1 to 5, wherein the polypropylene is unimodal.

8.  Polypropylene according to any one of the preceding claims, wherein the polypropylene has molecular weight distribution (MWD) measured according to ISO 16014 of not more than 8.00.

9.  Polypropylene according to any one of the preceding claims, wherein the polypropylene has a melt flow rate MFR$_2$ measured according to ISO 1133 of up to 10 g/10min.

10. Polypropylene according to any one of the preceding claims, wherein the polypropylene has a mmmm pentad concentration of higher than 91 % determined by NMR-spectroscopy.

11. Polypropylene according to any one of the preceding claims, wherein the polypropylene is a propylene homopolymer.

12. Polypropylene according to any one of the preceding claims, wherein the polypropylene has been produced in the presence of a catalytic system comprising catalyst, wherein the catalytic system has a porosity measured according to DIN 66135 of less than 1.40 ml/g.

13. Polypropylene according to any one of the preceding claims, wherein the polypropylene has been produced in the presence of a symmetric catalyst.

14. Polypropylene according to any one of the preceding claims, wherein the polypropylene has been produced according to a process as defined in any one of the claims 15 to 32.

15. A process for the preparation of a polypropylene according to any one of the preceding claims using a catalyst system of low porosity, the catalyst system comprising a symmetric catalyst, wherein the catalyst system has a porosity measured according to DIN 66135 of less than 1.40 ml/g.

16. The process according to claim 15, the catalyst system being a non-silica supported system.

17. The process according to claim 15 or 16, wherein the catalyst system has a porosity below the detection limit of DIN 66135.

18. The process according to any of the preceding claims 15 to 17, wherein the catalyst system has a surface area of less than 25 $m^2$/g, measured according to ISO 9277.

19. The process according to any one of the preceding claims 15 to 18, wherein the symmetric catalyst is a transition metal compound of formula (I)

$$(Cp)_2R_1MX_2 \qquad (I)$$

wherein

M is Zr, Hf or Ti,
X is independently a monovalent anionic ligand, such as $\sigma$-ligand
R is a briding group linking the two Cp ligands
Cp is an organic ligand selected from the group consisting of unsubstituted cyclopenadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl, with the proviso that both Cp-ligands are selected from the above stated group and both Cp-ligands are chemically the same, i.e. are identical.

20. The process according to claim 19, wherein M is Zr.

21. The process according to claim 19 or 20, wherein both Cp-ligands are selected from the group consisting of substituted cyclopenadienyl-ring, substituted indenyl-ring, substituted tetrahydroindenyl-ring, and substituted fluorenyl-ring, and
wherein the Cp-ligands are chemically the same as well as the substituents bonded to the rings.

22. The process according to any one of the preceding claims 19 to 21, wherein the substituents bonded to the ring are selected from the group consisting of $C_1$-$C_6$ alkyl moiety, aromatic ring moiety and heteroaromatic ring moiety.

23. The process according to any one of the preceding claims 20 to 23, wherein the moiety "R" has the formula (II)

$$-Y(R')_2- \qquad (II)$$

wherein

Y is C, Si or Ge, and
R' is $C_1$ to $C_{20}$ alkyl, $C_6$-$C_{12}$ aryl, or $C_7$-$C_{12}$ arylalkyl or trimethylsilyl.

24. The process according to claim 23, wherein Y is Si.

**25.** The process according to any one of the preceding claims 19 to 24, wherein "R" is selected from the group consisting of -Si($C_1$-$C_6$ alkyl)$_2$-, -Si(phenyl)$_2$-, and -Si($C_1$-$C_6$ alkyl)(phenyl)-.

**26.** The process according to any one of the preceding claims 19 to 25, wherein the symmetric catalyst is dimethylsilyl (2-methyl-4-phenyl-indenyl)$_2$zirconium dichloride.

**27.** The process according to any one of the preceding claims 15 to 26, wherein the process temperature is higher than 60 ˚C.

**28.** The process according to any one of the preceding claims 15 to 27, being a multi-stage process.

**29.** The process according to claim 28, wherein polymerization is carried out in at least two reactors in serial configuration.

**30.** The process according to claim 28 or 29, wherein polymerization is carried out in at least one bulk reactor and at least one gas phase reactor.

**31.** The process according to claim 30, wherein the bulk reactor is operated at a temperature of 40˚C to 110˚C and a pressure of 20 bar to 80 bar.

**32.** The process according to claim 30 or 31, wherein the gas phase reactor is operated at a temperature of 50˚C to 130˚C and a pressure of 5 bar to 50 bar.

**Patentansprüche**

**1.** Polypropylen, enthaltend

a. mindestens 0,5 Gew-% Xylol-lösliche Anteile und
b. einen Dehnungsverfestigungsindex (DVI@1s$^{-1}$) [strain hardening index (SHI@1s$^{-1}$)] in dem Bereich von 0,15 bis 0,30, gemessen mit einer Verformungssgeschwindigkeit $d\varepsilon/dt$ von 1,00 s$^{-1}$ bei einer Temperatur von 180˚C, worin der Dehnungsverfestigungsindex definiert ist als die Steigung des dekadischen Logarithmus der Zugspannungs-Wachstumsfunktion (lg ($\eta$-E$^+$)) als Funktion des dekadischen Logarithmus der Hencky Dehnung (lg ($\varepsilon$)) im Bereich der Hencky Dehnung von 1-3.

**2.** Polypropylen nach Anspruch 1, worin das Polypropylen einen Xylol-löslichen Anteil (XS) im Bereich von 0,5-1,5 Gew-% aufweist.

**3.** Polypropylen nach einem der vorangegangenen Ansprüche, worin das Polypropylen einen Schmelzpunkt Tm von mindestens 148 ˚C aufweist.

**4.** Polypropylen nach einem der vorangegangenen Ansprüche, worin das Polypropylen einen Mehrfach-Verzweigungs-Index (MVI) [multi-branching index (MBI)] von mindestens 0,10 aufweist, worin der Mehrfach-Verzweigungs-Index (MVI) definiert ist als die Steigung des Dehnungsverfestigungsindex (DVI) als Funktion des dekadischen Logarithmus der Hencky Dehnung (lg (d$\varepsilon$/dt)), worin

a. $d\varepsilon/dt$ die (Dehnungsgeschwindigkeit),
b. $\varepsilon$ die Hencky Dehnung, und
c. der Dehnungsverfestigungsindex (DVI) gemessen bei einer Temperatur von 180˚ C, worin der Dehnungsverfestigungsindex (DVI) definiert ist als die Steigung des dekadischen Logarithmus der Zugspannungs-Wachstumsfunktion (lg ($\eta_E^+$)) als Funktion des dekadischen Logarithmus der Hencky Dehnung (lg ($\varepsilon$)) im Bereich der Hencky Dehnung zwischen 1 bis 3, ist.

**5.** Polypropylen nach einem der vorangegangenen Ansprüche, worin das Polypropylen einen Verzweigungs-Index g' von weniger als 1,00 aufweist.

**6.** Polypropylen nach einem der vorangegangenen Ansprüche, worin das Polypropylen multimodal vorliegt.

**7.** Polypropylen nach einem der vorangegangenen Ansprüche 1 bis 5, worin das Polypropylen unimodal vorliegt.

**8.** Polypropylen nach einem der vorangegangenen Ansprüche, worin das Polypropylen eine nach ISO 16014 bestimmte Molekulargewichtsverteilung (MWD) von nicht mehr als 8,00 aufweist.

**9.** Polypropylen nach einem der vorangegangenen Ansprüche, worin das Polypropylen eine nach ISO 1133 bestimmte Schmelzflussrate $MFR_2$ von bis zu 10 g/10min. aufweist.

**10.** Polypropylen nach einem der vorangegangenen Ansprüche, worin das Polypropylen eine mittels NMR-Spektroskopie bestimmte mmmm pentad - Konzentration von mehr als 91 % aufweist.

**11.** Polypropylen nach einem der vorangegangenen Ansprüche, worin das Polypropylen ein Propylenhomopolymer ist.

**12.** Polypropylen nach einem der vorangegangenen Ansprüche, worin das Polypropylen in Gegenwart eines katalytischen Systems, umfassend einen Katalysator, worin das katalytische System eine nach DIN 66135 bestimmte Porosität von weniger als 1,40 ml/g aufweist, hergestellt wird.

**13.** Polypropylen nach einem der vorangegangenen Ansprüche, worin das Polypropylen in Gegenwart eines symmetrischen Katalysators hergestellt worden ist.

**14.** Polypropylen nach einem der vorangegangenen Ansprüche, worin das Polypropylen nach einem der in den Ansprüchen 15 bis 32 definierten Verfahren produziert worden ist.

**15.** Verfahren zur Herstellung eines Polypropylens nach einem der vorangegangenen Ansprüche unter Verwendung eines katalytischen Systems niedriger Porosität, das katalytische System umfassend einen symmetrischen Katalysator, worin das katalytische System eine nach DIN 66135 bestimmte Porosität von weniger als 1,40 ml/g aufweist.

**16.** Verfahren nach Anspruch 15, worin das katalytische System ein nicht-Siliciumdioxid geträgertes System darstellt.

**17.** Verfahren nach den Ansprüchen 15 oder 16, worin das katalytische System eine unterhalb der Bestimmungsgrenze nach DIN 66135 liegende Porosität aufweist.

**18.** Verfahren nach einem der vorangegangenen Ansprüche 15 bis 17, worin das katalytische System eine nach ISO 9277 bestimmte Oberfläche von weniger als $25m^2/g$ aufweist.

**19.** Verfahren nach einem der vorangegangenen Ansprüche 15 bis 18, worin der symmetrische Katalysator eine Übergangsmetallverbindung der Formel (I)

$$(Cp)_2R_1MX_2 \qquad (I)$$

ist,
worin

    M Zr, Hf oder Ti ist,
    X ein unabhängiger monovalenter anionischer Ligand, wie ein σ-Ligand ist R eine die beiden Cp-Liganden verbindende Gruppe ist,
    Cp ein organischer Ligand aus der Gruppe bestehend aus unsubstituiertem Cyclopentadienyl, unsubstituiertem Indenyl, unsubstituiertem Tetrahydroindenyl, unsubstituiertem Fluorenyl, substituiertem Cyclopentadienyl, substituiertem Indenyl, substituiertem Tetrahydroindenyl, und substituiertem Fluorenyl ist,
    mit der Maßgabe, dass beide Cp-Liganden aus der oben genannten Gruppe gewählt werden und beide Cp-Liganden chemisch gleich, d.h. identisch sind.

**20.** Verfahren nach Anspruch 19, worin M für Zr steht.

**21.** Verfahren nach Anspruch 19 oder 20, worin beide Cp-Liganden ausgewählt sind aus der Gruppe bestehend aus substituiertem Cyclopentadienyl-Ring, substituiertem Indenyl-Ring, substituiertem Tetrahydroindenyl-Ring und substituiertem Fluorenyl-Ring, und worin die Cp-Liganden ebenso wie die an die Ringe gebundenen Substituenten chemisch gleich sind.

**22.** Verfahren nach einem der vorangegangenen Ansprüche 19 bis 21, worin die an den Ring gebundenen Substituenten ausgewählt sind aus der Gruppe bestehend aus $C_1$-$C_6$ Alkylrest, aromatischem Ringsystem und heteroaromatischem Ringsystem.

23. Verfahren nach einem der vorangegangenen Ansprüche 20 bis 22, worin der Rest "R" die Formel (II)

$$-Y(R')_2- \qquad (II)$$

hat,
worin

Y C, Si oder Ge darstellt, und
R' $C_1$ bis $C_{20}$ Alkyl, $C_6$-$C_{12}$ Aryl, oder $C_7$-$C_{12}$ Alkylaryl oder Trimethylsilyl darstellt.

24. Verfahren nach Anspruch 23, worin Y für Si steht.

25. Verfahren nach einem der vorangegangenen Ansprüche 19 bis 24, worin "R" ausgewählt wird aus der Gruppe bestehend aus -Si($C_1$-$C_6$ Alkyl)$_2$-, -Si(phenyl)$_2$-, und -Si($C_1$-$C_6$ Alkyl)(phenyl)-.

26. Verfahren nach einem der vorangegangenen Ansprüche 19 bis 25, worin der symmetrische Katalysator Dimethylsilyl (2-methyl-4-phenyl-indenyl)$_2$-zirkoniumdichlorid ist.

27. Verfahren nach einem der vorangegangenen Ansprüche 15 bis 26, worin die Prozesstemperatur höher als 60˚C ist.

28. Verfahren nach einem der vorangegangenen Ansprüche 15 bis 27, welches ein mehrstufiges Verfahren ist.

29. Verfahren nach Anspruch 28, worin die Polymerisation in mindestens zwei seriell angeordneten Reaktoren durchgeführt wird.

30. Verfahren nach Anspruch 28 oder 29, worin die Polymerisation in mindestens einem Bulkreaktor und mindestens einem Gasphasenreaktor durchgeführt wird.

31. Verfahren nach Anspruch 30, worin der Bulkreaktor bei einer Temperatur von 40˚C bis 110˚C und einem Druck von 20 bar bis 80 bar betrieben wird.

32. Verfahren nach Anspruch 30 oder 31, worin der Gasphasenreaktor bei einer Temperatur von 50˚C bis 130˚C und einem Druck von 5 bar bis 50 bar betrieben wird.

**Revendications**

1. Polypropylène ayant

a) une quantité de matières solubles dans le xylène (XS) d'au moins 0,5 % en poids, et
b) un coefficient d'écrouissage (SHI@1s$^{-1}$) compris dans la plage de 0,15 à 0,30, mesuré par une vitesse de déformation d$\varepsilon$/dt de 1,00 s$^{-1}$ à une température de 180˚C, où le coefficient d'écrouissage (SHI) est défini comme la pente du logarithme à base 10 de la fonction de croissance de la contrainte de traction (log($\eta_\varepsilon^+$)) en fonction du logarithme à base 10 de la contrainte de Hencky (log($\varepsilon$)), dans la plage des contraintes de Hencky comprise entre 1 et 3.

2. Polypropylène selon la revendication 1, où le polypropylène a une teneur en matières solubles dans le xylène (XS) comprise dans la plage de 0,5 à 1,5 % en poids.

3. Polypropylène selon l'une quelconque des revendications précédentes, où le polypropylène a un point de fusion Tm d'au moins 148 ˚C.

4. Polypropylène selon l'une quelconque des revendications précédentes, où le polypropylène a un indice de ramification multiple (MBI) d'au moins 0,10, où l'indice de ramification multiple (MBI) est défini comme la pente du coefficient d'écrouissage (SHI) en fonction du logarithme à base 10 de la vitesse de déformation de Hencky (log(dε/dt)), où

    a) dε/dt est la vitesse de déformation,
    b) ε est la contrainte de Hencky, et
    c) le coefficient d'écrouissage (SHI) est mesuré à une température de 180˚C, où le coefficient d'écrouissage (SHI) est défini comme la pente du logarithme à base 10 de la fonction de croissance de la contrainte de traction $(\log(\eta_\varepsilon^+))$ en fonction du logarithme à base 10 de la contrainte de Hencky $(\log(\varepsilon))$ dans la plage des contraintes de Hencky comprise entre 1 et 3.

**5.** Polypropylène selon l'une quelconque des revendications précédentes, où le polypropylène a un indice de ramification g' inférieur à 1,00.

**6.** Polypropylène selon l'une quelconque des revendications précédentes, où le polypropylène est multimodal.

**7.** Polypropylène selon l'une quelconque des revendications 1 à 5, où le polypropylène est unimodal.

**8.** Polypropylène selon l'une quelconque des revendications précédentes, où le polypropylène a une distribution des masses moléculaires (MWD), mesurée selon ISO 16 014, non supérieure à 8,00.

**9.** Polypropylène selon l'une quelconque des revendications précédentes, où le polypropylène a un indice de fluidité $MFR_2$, mesuré selon ISO 1133, allant jusqu'à 10 g/10 min.

**10.** Polypropylène selon l'une quelconque des revendications précédentes, où le polypropylène a une concentration en pentade mmmm supérieure à 91 %, déterminée par spectroscopie RMN.

**11.** Polypropylène selon l'une quelconque des revendications précédentes, où le polypropylène est un homopolymère de propylène.

**12.** Polypropylène selon l'une quelconque des revendications précédentes, où le polypropylène a été produit en présence d'un système catalytique comprenant un catalyseur, le système catalytique ayant une porosité mesurée selon DIN 66135 inférieure à 1,40 ml/g.

**13.** Polypropylène selon l'une quelconque des revendications précédentes, où le polypropylène a été produit en présence d'un catalyseur symétrique.

**14.** Polypropylène selon l'une quelconque des revendications précédentes, où le polypropylène a été produit conformément à un procédé tel que défini dans l'une quelconque des revendications 15 à 32.

**15.** Procédé de préparation d'un polypropylène selon l'une quelconque des revendications précédentes, par utilisation d'un système catalyseur à faible porosité, le système catalyseur comprenant un catalyseur symétrique, le système catalyseur ayant une porosité, mesurée selon DIN 66135, inférieure à 1,40 ml/g.

**16.** Procédé selon la revendication 15, dans lequel le système catalyseur est un système non supportée sur silice.

**17.** Procédé selon la revendication 15 ou 16, dans lequel le système catalyseur a une porosité inférieure au seuil de détection de DIN 66135.

**18.** Procédé selon l'une quelconque des revendications 15 à 17, dans lequel le système catalyseur a une aire spécifique inférieure à 25 $m^2$/g, mesurée selon ISO 92 77.

**19.** Procédé selon l'une quelconque des revendications précédentes 15 à 18, dans lequel le catalyseur symétrique est un composé d'un métal de transition de formule (I)

$$(Cp)_2R_1MX_2 \qquad (I)$$

dans laquelle

M est Zr, Hf ou Ti,

X représente indépendamment un ligand anionique monovalent, tel qu'un ligand σ,
R est un groupe de pontage qui relie les deux ligands Cp,
Cp est un ligand organique choisi dans le groupe constitué des groupes cyclopentadiényle non substitué, indényle non substitué, tétrahydro-indényle non substitué, fluorényle non substitué, cyclopentadiényle substitué, indényle substitué, tétrahydro-indényle substitué et fluorényle substitué, à la condition que les deux ligands Cp soient choisis dans le groupe mentionné ci-dessus, et que les deux ligands Cp soient chimiquement les mêmes, c'est-à-dire soient identiques.

20. Procédé selon la revendication 19, dans lequel M est Zr.

21. Procédé selon la revendication 19 ou 20, dans lequel les deux ligands Cp sont choisis dans le groupe constitué du cycle cyclopentadiényle substitué, du cycle indényle substitué, du cycle tétrahydro-indényle substitué, du cycle fluorényle substitué, et où les ligands Cp sont chimiquement les mêmes, ainsi que les substituants liés aux cycles.

22. Procédé selon l'une quelconque des revendications précédentes 19 à 21, dans lequel les substituants liés au cycle sont choisis dans le groupe constitué d'un groupement alkyle en $C_1$-$C_6$, d'un groupement cycle aromatique et d'un groupement cycle hétéroaromatique.

23. Procédé selon l'une quelconque des revendications précédentes 20 à 23, dans lequel le fragment "R" a la formule (II)

$$-Y(R')_2- \qquad (II)$$

dans laquelle

Y est C, Si ou Ge, et
R' est un groupe alkyle en $C_1$ à $C_{20}$, aryle en $C_6$-$C_{12}$ ou arylalkyle en $C_7$-$C_{12}$ ou triméthylsilyle.

24. Procédé selon la revendication 23, dans lequel Y est Si.

25. Procédé selon l'une quelconque des revendications précédentes 19 à 24, dans lequel "R" est choisi dans le groupe constitué des groupes -Si(alkyle en $C_1$-$C_6$)$_2$-, -Si(phényle)$_2$- et -Si(alkyle en $C_1$-$C_6$)(phényle)-.

26. Procédé selon l'une quelconque des revendications précédentes 19 à 25, dans lequel le catalyseur symétrique est le dichlorure de diméthylsilyl(2-méthyl-4-phényl-indényl)$_2$zirconium.

27. Procédé selon l'une quelconque des revendications précédentes 15 à 26, dans lequel la température du procédé est supérieure à 60°C.

28. Procédé selon l'une quelconque des revendications précédentes 15 à 27, qui est un procédé en plusieurs étapes.

29. Procédé selon la revendication 28, dans lequel la polymérisation est mise en oeuvre dans au moins deux réacteurs montés en série.

30. Procédé selon la revendication 28 ou 29, dans lequel la polymérisation est mise en oeuvre dans au moins un réacteur pour polymérisation en masse et au moins un réacteur en phase gazeuse.

31. Procédé selon la revendication 30, dans lequel le réacteur pour polymérisation en masse est exploité à une température de 40 °C à 110°C et sous une pression de 20 à 80 bar.

32. Procédé selon la revendication 30 ou 31, dans lequel le réacteur en phase gazeuse est exploité à une température de 50 °C à 130°C et sous une pression de 5 à 50 bar.

**Figure 1:** Determination of the SHI of "A" at a strain rate of 0.1s[-1] (SHI@0.1s[-1])

**Figure 2**

**Figure 3: Catalyst particle size distribution via Coulter counter**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0148034 A
- WO 03051934 A
- WO 9428034 A
- EP 0887379 A

- WO 9212182 A
- WO 9722633 A
- EP 879830 A


**Non-patent literature cited in the description**

- **T Hayashi.** *Pentad concentration*
- **R. Chujo ; T. Asakura.** *Polymer,* 1988, vol. 29, 138-43

- **Chujo R et al.** *Polymer,* 1994, vol. 35, 339
- **T. Hayashi ; Y. Inoue ; R. Chüjö ; T. Asakura.** *Polymer,* 1988, vol. 29, 138-43